# EUROPÄISCHE PATENTSCHRIFT

(11) **EP 2 835 973 B1**
(45) Veröffentlichungstag und Bekanntmachung des Hinweises auf die Patenterteilung: **07.10.2015**
(21) Anmeldenummer: 13179412.5
(22) Anmeldetag: 06.08.2013
(51) Int. Cl.: H04N 13/02

(54) **3D-Kamera und Verfahren zur Erfassung von dreidimensionalen Bilddaten**
3D camera and method for capturing of three-dimensional image data
Caméra 3D et un procédé de capture de données d'image tridimensionnelles

(43) Veröffentlichungstag der Anmeldung: 11.02.2015
(73) Patentinhaber: SICK AG, 79183 Waldkirch (DE)
(72) Erfinder: Pfister, Dr. Thorsten, 79111 Freiburg (DE)
(74) Vertreter: Hehl, Ulrich

(56) Entgegenhaltungen:
- WO-A2-01/80545
- WO-A2-2012/082443
- CN-A- 102 298 216
- CN-Y- 2 240 156
- GB-A- 2 368 221
- JP-A- 2004 257 837
- US-A1- 2003 044 060
- US-A1- 2012 293 625
- US-B2- 7 433 024
- US-B2- 7 710 451
- DOO HYUN LEE ET AL: "A biprism-stereo camera system", PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, IEEE, THE INSTITUTE OF ELECTRICAL AND ELECTRONICS ENGINEERS, INC, US, vol. 1, 23 June 1999 (1999-06-23), pages 82-87, XP010347702, ISBN: 978-0-7695-0149-9
- XIAOYAN LI ET AL: "<title>Analysis and optimization of the stereo system with a biprism adapter</title>", PROCEEDINGS OF SPIE, vol. 7506, 4 November 2009 (2009-11-04), pages 75061V-75061V-8, XP055135375, ISSN: 0277-786X, DOI: 10.1117/12.837876
- DOOHYUN LEE ET AL: "A Novel Stereo Camera System by a Biprism", IEEE TRANSACTIONS ON ROBOTICS AND AUTOMATION, IEEE INC, NEW YORK, US, vol. 16, no. 5, 1 October 2000 (2000-10-01), XP011053528, ISSN: 1042-296X, DOI: 10.1109/70.880803

## Beschreibung

Die Erfindung betrifft eine 3D-Kamera zur Erfassung von dreidimensionalen Bilddaten mit einer Spiegeloptik zur Erweiterung des Sichtfeldes.

Im Gegensatz zu einer herkömmlichen Kamera nimmt eine 3D-Kamera auch eine Tiefeninformation auf und erzeugt somit dreidimensionale Bilddaten mit Abstands- oder Entfernungswerten für die einzelnen Pixel des 3D-Bildes, das auch als Entfernungsbild oder Tiefenkarte bezeichnet wird. Die zusätzliche Entfernungsdimension lässt sich in einer Vielzahl von Anwendungen nutzen, um mehr Informationen über Objekte in der von der Kamera erfassten Szenerie zu gewinnen und so verschiedene Aufgaben im Bereich der Industriesensorik zu lösen.

In der Automatisierungstechnik können anhand dreidimensionaler Bildinformationen Objekte erfasst und klassifiziert werden, um weitere automatische Bearbeitungsschritte davon abhängig zu machen, welche Objekte vorzugsweise einschließlich ihrer Position und Orientierung erkannt wurden. Damit kann beispielsweise die Steuerung von Robotern oder verschiedenartigen Aktoren an einem Förderband unterstützt werden.

In mobilen Anwendungen, seien es Fahrzeuge mit Fahrer wie PKW, LKW, Arbeitsmaschinen oder Gabelstapler oder führerlose Fahrzeuge wie AGVs (Automated Guided Vehicle) oder Flurförderzeuge, soll die Umgebung und insbesondere ein geplanter Fahrweg möglichst vollständig und dreidimensional erfasst werden. Damit soll die autonome Navigation ermöglicht oder ein Fahrer unterstützt werden, um unter anderem Hindernisse zu erkennen, Kollisionen zu vermeiden oder das Be- und Entladen von Transportgütern einschließlich Kartons, Paletten, Containern oder Anhängern zu erleichtern.

Zur Ermittlung der Tiefeninformationen sind verschiedene Verfahren bekannt, wie Lichtlaufzeitmessungen (Time-of-Flight) oder Stereoskopie. Bei einer Lichtlaufzeitmessung wird ein Lichtsignal ausgesandt und die Zeit bis zum Empfang des remittierten Lichtsignals gemessen. Man unterscheidet hier Puls- und Phasenverfahren. Stereoskopieverfahren sind dem räumlichen Sehen mit zwei Augen angelehnt und suchen in zwei aus unterschiedlicher Perspektive aufgenommenen Bildern einander zugeordnete Bildelemente, aus deren Disparität in Kenntnis der optischen Parameter der Stereokamera die Entfernung durch Triangulation geschätzt wird. Stereosysteme können passiv, also allein mit dem Umgebungslicht arbeiten, oder eine eigene Beleuchtung aufweisen, die vorzugsweise ein Beleuchtungsmuster erzeugt, um die Entfernungsschätzung auch in strukturlosen Szenerien zu ermöglichen. Eine 3D-Kamera mit Lichtlaufzeitmessung wird beispielsweise in der WO 2012 082 443 A2 beschrieben. Eine stereoskopische 3D-Kamera mit Kontrastmusterbeleuchtung ist beispielsweise aus der US 2012 293 625 bekannt. In einem weiteren 3D-Bildgebungsverfahren, das beispielsweise aus der US 7 433 024 bekannt ist, wird ein Beleuchtungsmuster von nur einer Kamera aufgenommen und die Entfernung durch Musterauswertung geschätzt.

Das Sichtfeld (FOV, Field of View) solcher 3D-Kameras ist selbst mit Fischaugenobjektiven auf weniger als 180° und in der Praxis sogar meist unter 90° begrenzt. Das Sichtfeld durch Einsatz mehrerer Kameras zu erweitern ist denkbar, kostet aber erheblichen Hardware- und Justierungsaufwand.

Im Stand der Technik, beispielsweise aus der US 6 157 018 oder der WO 0 176 233 A1, sind diverse Spiegeloptiken bekannt, um eine omnidirektionale 3D-Bildgebung zu erreichen. Solche Kameras werden wegen der Kombination aus einer Abbildungsoptik und nachgeschalteter Spiegeloptik als katadioptrische Kameras bezeichnet. Nayar und Baker in "Catadioptric image formation", Proceedings of the 1997 DARPA Image Understanding Workshop, New Orleans, May 1997, Seiten 1341-1437 haben gezeigt, dass für eine Entzerrung eine sogenannte Single-Viewpoint-Bedingung erfüllt sein muss. Diese ist für gängige Spiegelformen wie elliptische, parabolische, hyberbolische oder konische Spiegel gegeben.

Alternativ können auch mehrere nacheinander angeordnete Spiegel verwendet werden, wie beispielsweise in der EP 1 141 760 B1 oder der US 6 611 282 B1. Die EP 0 989 436 A2 offenbart ein stereoskopisches Panorama-Aufnahmesystem mit einem Spiegelelement, das wie eine auf dem Kopf stehende Pyramide mit quadratischer Grundfläche geformt ist. In der US 7 710 451 B1 wird das Sichtfeld einer Kamera mit Hilfe eines Spiegelelements geteilt, so dass zwei virtuelle Kameras entstehen, die dann als stereoskopische Kamera genutzt werden. Die WO 2012/038601 A1 ordnet zwei Bildsensoren jeweils eine Spiegeloptik zu, um einen 360°-Bereich stereoskopisch erfassen zu können. In einem ähnlichen Aufbau, jedoch mit einer anderen Spiegelform, wird in der US 6 304 285 B1 eine strukturierte Lichtquelle und eine Monokamera in einem Triangulationsverfahren eingesetzt. Das führt zu großen Bauhöhen. Außerdem sind die Spiegeloptiken wie der Gesamtaufbau komplex und damit nicht kostengünstig herstellbar.

In der US 2003/0044060A1 rotiert ein Keilspiegel, um im Verlauf der Rotationsbewegung nach und nach zwei Panoramabilder zu erfassen. Diese Panoramabilder werden anschließend mittels stereoskopischer Auswertung zu einem 3D-Panoramabild verrechnet.

Die GB 2 368 221 A beschreibt eine Überwachungskamera, die in zwei Modi betrieben werden kann, nämlich einer omnidirektionalen Rundumschau und einer Fixierung eines bestimmten Teilbereichs. Zum Umschalten der Modi wird wahlweise ein Spiegel in den Strahlengang eingebracht, um entweder eine Panoramaoptik oder eine Zoomoptik einzusetzen. Um auch vertikal 360° erfassen zu können, werden in weiteren Ausführungsformen zwei um 180° versetzt ausgerichtete Panoramaoptiken verwendet und die Szenerie mittels zweier wahlweise in den Strahlengang eingebrachter Spiegel auf zwei Hälften der gleichen Kamera abgebildet.

In der WO 01/80545 A2 werden zahlreiche Bildstreifen erfasst und anschließend zu einem Panorama- bzw. Stereopanoramabild zusammengesetzt. Dazu erfolgt jeweils eine Art Scanbewegung durch Rotation oder Translation, damit die Bildstreifen die Szenerie abdecken. In verschiedenen Ausführungsformen werden Spiegel eingesetzt, um mehrere Bildstreifen gleichzeitig zu erfassen.

Es ist deshalb Aufgabe der Erfindung, den Sichtbereich einer 3D-Kamera mit einfachen Mitteln zu erweitern.

Diese Aufgabe wird durch eine 3D-Kamera nach Anspruch 1 beziehungsweise 3 gelöst. Dabei geht die Erfindung von dem Grundgedanken aus, ein zweiteiliges Sichtfeld zu überwachen, also aus der 3D-Kamera mit Hilfe der Spiegeloptik eine bidirektionale Kamera zu machen. Dementsprechend weist die Spiegeloptik vorzugsweise genau zwei Spiegelflächen auf, die jeweils ein zugehöriges Teilsichtfeld erzeugen. Damit werden zwei separate Teilsichtfelder überwacht, die sich jeweils über einen Winkelbereich erstrecken. Getrennt sind die beiden Teilsichtfelder durch vorzugsweise ebenfalls zwei Winkelbereiche, die von den beiden Spiegelflächen nicht erfasst werden, so dass in diesen Winkeln keine 3D-Bilddaten erzeugt werden. Eine derartige Spiegeloptik mit zwei Spiegelflächen erlaubt, den konstruktiven Aufbau der Spiegeloptik gegenüber omnidirektionalen 3D-Kameras erheblich zu vereinfachen. Zugleich ist eine bidirektionale Bilderfassung gerade für Fahrzeuge besonders nützlich. Denn obwohl manche Fahrzeuge in der Lage sind, sich in beliebige Richtungen zu bewegen, ist doch meist die Bewegung auf eine Vorwärts- und Rückwärtsbewegung beschränkt und eine Seitwärtsbewegung oder Drehung im Stand nicht möglich. Dann genügt es aber auch, die Raumbereiche vor und hinter dem Fahrzeug zu erfassen.

Die Erfindung hat den Vorteil, dass eine 3D-Kamera auf sehr einfache Weise erweiterbar wird. Die erfindungsgemäß eingesetzte Spiegeloptik ist sogar dafür geeignet, eine herkömmliche 3D-Kamera mit kleinem Sichtfeld zu einer bidirektionalen Kamera nachzurüsten. Das erleichtert den Einsatz und die Umstellung auf die erfindungsgemäße 3D-Kamera. Die dreidimensionale Umgebungserfassung wird besonders kompakt, effizient und kostengünstig. Außerdem hat die bidirektionale 3D-Kamera eine geringe Baugröße und vor allem -höhe, so dass sie beim Einsatz an einem Fahrzeug allenfalls geringfügig über das Fahrzeug hinausragt.

Die Spiegeloptik ist bevorzugt wie ein Satteldach geformt, dessen First senkrecht zu der optischen Achse des Bildsensors ausgerichtet und dem Bildsensor zugewandt ist, so dass die Dachflächen die vordere Spiegelfläche und die rückseitige Spiegelfläche bilden. Der Begriff Satteldach ist mit Absicht anschaulich gewählt. Alternativ könnte diese Form als Keil bezeichnet werden, mathematisch korrekt wäre ein Dreiecksprisma. Allerdings sind diese Begriffe in einem verallgemeinerten Sinne zu verstehen. Weder ist zunächst eine Regelmäßigkeit gefordert, noch müssen die Außenflächen eben sein, sondern können auch Krümmungen aufweisen, was bei einem Satteldach zumindest unüblich wäre. Weiterhin kommt es nur auf die beiden Flächen an, die bei einem Satteldach den eigentlichen Dachflächen entsprechen, denn dies sind die beiden Spiegelflächen. Die übrige Geometrie spielt optisch keine Rolle und kann konstruktiven Forderungen angepasst werden. Dazu zählt auch, dass das Satteldach der Spiegeloptik allein auf die Spiegelflächen reduziert ist.

In einer bevorzugten Ausführungsform ist das Satteldach regelmäßig und symmetrisch ausgebildet. Dabei sind die Dreiecksgrundflächen gleichschenklig, und der First steht zu diesen Grundflächen sowie zu der Symmetrieachse der Dreiecksgrundflächen senkrecht und verläuft durch die Spitze der Dreiecksgrundfläche, in der sich die beiden Schenkel schneiden. Es ergeben sich dann zwei gleichartige, insbesondere auch ebene Spiegelflächen gleicher Größe und Neigung und dementsprechend zwei gleichartige erste und zweite Teilsichtfelder. Dadurch werden radiale Bildverzerrungen vermieden, die vertikale Auflösung ändert sich nur linear, und es wird eine einfache Bildtransformation ermöglicht. Außerdem ist eine solche Spiegeloptik einfach und genau herstellbar.

Der First ist vorzugsweise zu der optischen Achse des Bildsensors versetzt angeordnet. Dadurch wird einem der Teilsichtfelder ein größerer Anteil der Fläche des Bildsensors zugeordnet und somit ein Teilsichtfeld entsprechend auf Kosten des anderen Teilsichtfeldes vergrößert.

Die vordere Spiegelfläche und die rückseitige Spiegelfläche weisen vorzugsweise unterschiedliche Größen auf. Das bezieht sich auf die relevanten Flächen, also diejenigen Anteile, die sich tatsächlich im Sichtfeld des Bildsensors befinden. Beispielsweise wird im Falle einer wie ein Satteldach geformten Spiegeloptik die eine Dachfläche tiefer heruntergezogen als die andere. Erneut wird auf diese Weise ein Teilsichtfeld auf Kosten des anderen Teilsichtfeldes vergrößert.

Die vordere Spiegelfläche weist bevorzugt eine andere Neigung gegenüber der optischen Achse des Bildsensors auf als die rückseitige Spiegelfläche. Damit liegen die überwachten Teilsichtfelder in unterschiedlichen Höhenwinkeln. Sind die Spiegelflächen nicht eben, so ist mit Neigung keine lokale Neigung, sondern eine globale Gesamtneigung gemeint, beispielsweise einer Sekante, welche die äußersten Punkte der jeweiligen Dachfläche verbindet.

Zumindest eine der Spiegelflächen weist zumindest abschnittsweise eine konvexe oder konkave Kontur auf. Diese Kontur ist in einer Ausführungsform über eine gesamte Spiegelfläche ausgeprägt. Alternativ werden Krümmungen und somit die resultierenden Teilsichtfelder sogar lokal angepasst.

Die Kontur ist bevorzugt in Richtung der optischen Achse des Bildsensors ausgebildet. Die Richtung dieser optischen Achse wird auch als Höhenrichtung bezeichnet. Dann bedeutet eine konkave Krümmung mehr seitlichen Sichtwinkel, also eine in Höhenrichtung größere Ausdehnung des Sichtfelds, dafür weniger Pixel je Winkelbereich beziehungsweise weniger Auflösungsvermögen, und eine konvexe Krümmung das Umgekehrte.

Die Kontur ist bevorzugt um die optische Achse des Bildsensors umlaufend ausgebildet, um den ersten Winkelbereich und/oder den zweiten Winkelbereich zu verändern. Eine solche Kontur verändert den Winkelbereich des zugehörigen Teilsichtfeldes, der bei konkaver Krümmung unter Auflösungsverlust vergrößert wird und umgekehrt bei konvexer Krümmung. Ist die Krümmung nur lokal ausgebildet, so entstehen die Effekte auch nur in dem betroffenen Teilwinkelbereich. Durch die Zweiteilung der Spiegeloptik in eine vordere Spiegelfläche und eine rückseitige Spiegelfläche bleiben solche Konturen wesentlich flacher als im Falle einer herkömmlichen omnidirektionalen Spiegeloptik.

Die 3D-Kamera ist bevorzugt als Stereokamera ausgebildet und weist dazu mindestens zwei Kameramodule mit jeweils einem Bildsensor in zueinander versetzter Perspektive sowie eine Stereoskopieeinheit auf, in der mittels eines Stereoalgorithmus' einander zugehörige Teilbereiche in von den beiden Kameramodulen aufgenommenen Bildern erkannt werden und deren Entfernung anhand der Disparität berechnet wird, wobei jedes Kameramodul mit Hilfe einer dem Bildsensor vorgeordneten Spiegeloptik mit einer vorderen Spiegelfläche und einer rückseitigen Spiegelfläche als bidirektionale Kamera ausgebildet ist. Die Spiegeloptiken können jede hier beschriebene Form aufweisen, sind jedoch vorzugsweise für alle Kameramodule untereinander zumindest im Wesentlichen gleichartig ausgebildet, da bei zu großen Abweichungen das Auffinden von Korrespondenzen in dem Stereoalgorithmus erschwert oder verhindert wird.

Die Spiegeloptiken weisen bevorzugt eine um die optische Achse des zugehörigen Bildsensors umlaufende konvexe Kontur auf, die gerade so stark gekrümmt ist, dass die nicht überwachten Winkelbereiche eines jeweiligen Kameramoduls einer Abschattungszone durch die anderen Kameramodule entsprechen. Das nutzt die Vorteile einer zweigeteilten Spiegeloptik optimal aus. Eine omnidirektionale Spiegeloptik wäre komplexer und hätte stärkere Verzerrungen, obwohl der zusätzliche Sichtbereich aufgrund von Abschattungen ohnehin verloren ginge.

Die 3D-Kamera weist bevorzugt eine Beleuchtungseinheit zur Erzeugung eines strukturierten Beleuchtungsmusters in dem Überwachungsbereich auf, wobei der Beleuchtungseinheit eine Spiegeloptik mit einer vorderen Spiegelfläche und einer rückseitigen Spiegelfläche vorgeordnet ist. Auch diese Spiegeloptik kann prinzipiell jede hier beschriebene Form annehmen. Im Gegensatz zu den Kameramodulen einer Stereokamera muss auch kein Wert darauf gelegt werden, dass die Spiegeloptik gleichartig zu anderen Spiegeloptiken ist, obwohl dies wegen der vereinfachten Herstellung und Verarbeitung auch hier vorteilhaft sein kann.

Die 3D-Kamera ist bevorzugt als Lichtlaufzeitkamera ausgebildet und weist dazu eine Beleuchtungseinheit und eine Lichtlaufzeiteinheit auf, um die Lichtlaufzeit eines Lichtsignals zu bestimmen, das von der Beleuchtungseinheit ausgesandt, an Objekten in dem Überwachungsbereich remittiert und in dem Bildsensor erfasst wird. Sowohl Beleuchtungseinheit als auch Bildsensor beziehungsweise Detektionseinheit ist dabei vorzugsweise jeweils eine Spiegeloptik zugeordnet. Die Beleuchtungseinheit kann weiterhin mehrere Lichtquellen umfassen, denen jeweils einzeln, in Gruppen oder insgesamt eine Spiegeloptik zugeordnet ist. Die Spiegeloptiken können erneut jede hier beschriebene Form annehmen und sind untereinander vorzugsweise gleich. Vorzugsweise sind die Spiegeloptiken als gemeinsames Bauteil ausgebildet. Immer wenn mehrere Spiegeloptiken benötigt werden, etwa um die Sicht- und Beleuchtungsfelder der beiden Module einer Stereokamera beziehungsweise der Beleuchtungs- und Detektionsmodule einer Stereo-, Mono- oder Lichtlaufzeitkamera aufzuteilen, kann auf diese Weise mindestens ein separates Bauteil eingespart werden. Das System wird dadurch robuster und außerdem einfacher herzustellen und zu justieren. Ein gemeinsames Bauteil ist besonders einfach herzustellen, wenn die Spiegeloptiken untereinander gleich sind und in der Richtung, in der sie gegeneinander versetzt angeordnet sind, flach ausgebildet sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung einer stereoskopischen 3D-Kamera;
- Fig. 2: eine Blockdarstellung einer Lichtlaufzeitkamera;
- Fig. 3a: eine Seitenansicht eines Fahrzeugs mit einer bidirektionalen 3D-Kamera;
- Fig. 3b: eine Draufsicht auf das Fahrzeug gemäß Figur 3a;
- Fig. 4: eine Seitenansicht einer bidirektionale 3D-Kamera mit Spiegeloptik;
- Fig. 5: eine Draufsicht auf eine Stereokamera mit Beleuchtung und jeweils den Modulen zugeordneten Spiegeloptiken:
- Fig. 6a: eine Seitenansicht einer bidirektionalen 3D-Kamera mit einer regelmäßig ausgebildeten Spiegeloptik;
- Fig. 6b: eine Seitenansicht ähnlich Figur 6a mit unterschiedlich geneigten Spiegelflächen;
- Fig. 6c: eine Seitenansicht ähnlich Fig. 6a mit lateral versetzter Spiegeloptik;
- Fig. 6d: eine Seitenansicht ähnlich Fig. 6a mit gekrümmten Spiegelflächen;
- Fig. 7a: eine Draufsicht auf eine stereoskopische 3D-Kamera mit zweiflächiger Spiegeloptik und Abschattungsbereichen;
- Fig. 7b: eine Illustration einer Spiegeloptik, mit der aufgrund einer umlaufenden konvexen Kontur der Spiegelflächen die Blindbereiche zwischen den Teilsichtfeldern der Spiegelflächen einer bidirektionalen 3D-Kamera gerade den in Figur 7a gezeigten Abschattungsbereichen entsprechen;
- Fig. 8a: eine Draufsicht auf eine Lichtlaufzeitkamera mit einer Beleuchtung und jeweils den Modulen zugeordneten Spiegeloptiken;
- Fig. 8b: eine schematische Draufsicht auf eine Lichtlaufzeitkamera ähnlich Figur 8a mit einer ersten Variation von Lichtquellen der Beleuchtung und diesen zugeordneten Spiegeloptiken; und
- Fig. 8c: eine schematische Draufsicht auf eine Lichtlaufzeitkamera ähnlich Figur 8a mit einer zweiten Variation von Lichtquellen der Beleuchtung und diesen zugeordneten Spiegeloptiken.

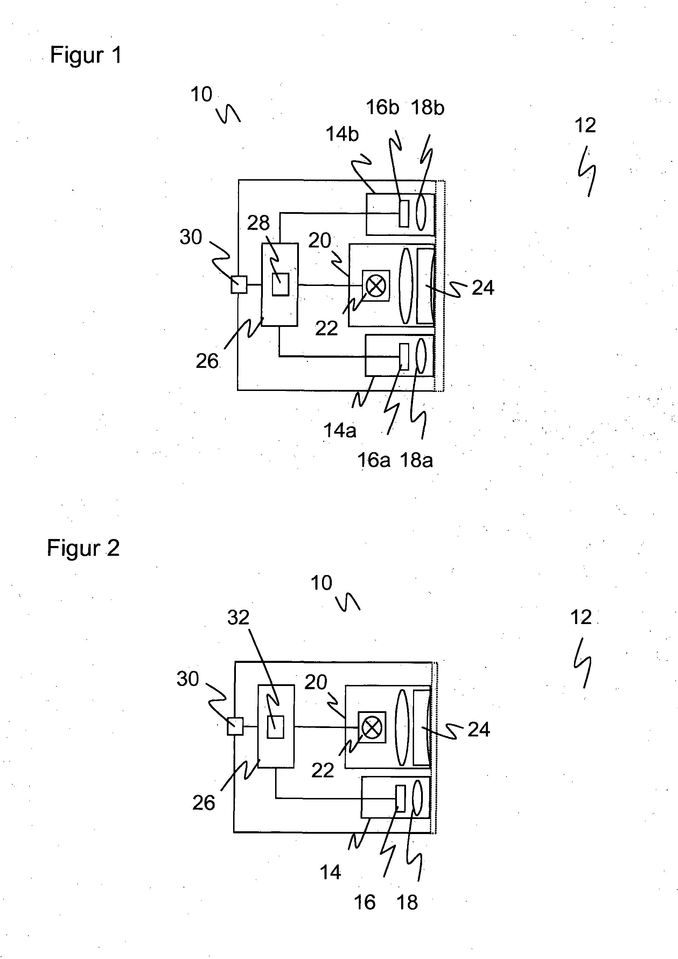

Figur 1 zeigt in einer Blockdarstellung zunächst ohne erfindungsgemäße Spiegeloptik den allgemeinen Aufbau einer 3D-Kamera 10 zur Aufnahme von Tiefenkarten eines Überwachungs- oder Raumbereichs 12. Diese Tiefenkarten werden beispielsweise für eine der einleitend genannten Anwendungen weiter ausgewertet.

In der 3D-Kamera 10 sind zwei Kameramodule 14a-b in einem bekannten festen Abstand zueinander montiert und nehmen jeweils Bilder des Raumbereichs 12 auf. In jeder Kamera ist ein Bildsensor 16a-b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 16a-b ist jeweils ein Objektiv mit einer abbildenden Optik zugeordnet, welches als Linse 18a-b dargestellt ist und in der Praxis als jede bekannte Abbildungsoptik realisiert sein kann.

In der Mitte zwischen den beiden Kameramodulen 14a-b ist eine Beleuchtungseinheit 20 mit einer Lichtquelle 22 dargestellt. Diese räumliche Anordnung ist nur als Beispiel zu verstehen, und auf die Bedeutung der gegenseitigen Positionierung von Kameramodulen 14a-b und Beleuchtungseinheit 20 wird weiter unten noch näher eingegangen. Die Beleuchtungseinheit 20 erzeugt mit Hilfe eines Mustererzeugungselements 24 in dem Raumbereich 12 ein strukturiertes Beleuchtungsmuster. Das Beleuchtungsmuster sollte vorzugsweise zumindest lokal eindeutig oder selbstunähnlich in dem Sinne sein, dass Strukturen des Beleuchtungsmusters nicht zu Scheinkorrelationen führen, beziehungsweise einen Beleuchtungsbereich eindeutig kennzeichnen.

Mit den beiden Bildsensoren 16a-b und der Beleuchtungseinheit 20 ist eine kombinierte Auswertungs- und Steuerungseinheit 26 verbunden. Mittels der Auswertungs- und Steuerungseinheit 26 wird das strukturierte Beleuchtungsmuster erzeugt, und sie empfängt Bilddaten der Bildsensoren 16a-b. Aus diesen Bilddaten berechnet eine Stereoskopieeinheit 28 der Auswertungs- und Steuerungseinheit 26 mit einem an sich bekannten Stereoskopiealgorithmus dreidimensionale Bilddaten (Entfernungsbild, Tiefenkarte) des Raumbereichs 12.

Über einen Ausgang 30 kann die 3D-Kamera 10 Tiefenkarten oder andere Messergebnisse ausgeben, beispielsweise Rohbilddaten eines Kameramoduls 14a-b, aber auch Auswertungsergebnisse wie Objektdaten oder die Identifizierung bestimmter Objekte. Speziell in sicherheitstechnischer Anwendung kann das Erkennen eines unzulässigen Eingriffs in Schutzfelder, die in dem Raumbereich 12 definiert wurden, zur Ausgabe eines sicherheitsgerichteten Abschaltsignals führen. Dazu ist der Ausgang 30 dann vorzugsweise als Sicherheitsausgang (OSSD, Output Signal Switching Device) ausgeführt und die 3D-Kamera insgesamt im Sinne einschlägiger Sicherheitsnormen ausfallsicher aufgebaut.

Figur 2 zeigt in einer weiteren Blockdarstellung eine alternative Ausführungsform der 3D-Kamera 10 als Lichtlaufzeitkamera. Dabei bezeichnen hier und im Folgenden die gleichen Bezugszeichen gleiche oder einander entsprechende Merkmale. Auf der relativ groben Ebene der Darstellung unterscheidet sich die Lichtlaufzeitkamera von einer Stereokamera hauptsächlich durch das Fehlen eines zweiten Kameramoduls. Ein solcher Aufbau ist auch derjenige einer 3D-Kamera, die Entfernungen in einem Projektionsverfahren aus entfernungsabhängigen Veränderungen des Beleuchtungsmusters schätzt. Ein weiterer Unterschied besteht darin, dass die Auswertung eine andere ist. Dazu ist anstelle der Stereoskopieeinheit 28 eine Lichtlaufzeiteinheit 32 in der Auswertungs- und Steuereinheit 26 vorgesehen, welche die Lichtlaufzeit zwischen Aussenden und Empfangen eines Lichtsignals misst. Die Lichtlaufzeiteinheit 32 kann auch direkt in den Bildsensor 16 integriert sein, beispielsweise in einem PMD-Chip (Photonmischdetektion). Entsprechend ist in einer 3D-Kamera für ein Projektionsverfahren eine angepasste Einheit zum Auswerten des Beleuchtungsmusters vorgesehen.

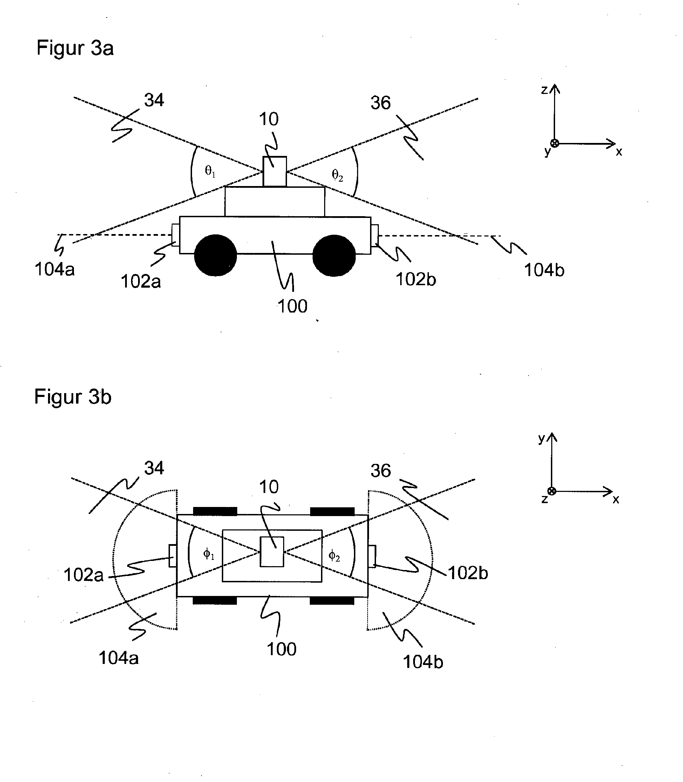

Die Figuren 3a und 3b zeigen in einer Seitenansicht beziehungsweise einer Draufsicht ein Fahrzeug 100, das seine Umgebung mit einer erfindungsgemäßen bidirektionalen 3D-Kamera 10 überwacht. Dazu wird einer herkömmlichen 3D-Kamera, wie sie zu den Figuren 1 und 2 beschrieben wurde, eine weiter unten in verschiedenen Ausführungsformen erläuterte spezielle Spiegeloptik nachgeordnet. Durch diese Spiegeloptik wird das Sichtfeld der 3D-Kamera in ein vorderes Teilsichtfeld 34 und ein hinteres Teilsichtfeld 36 zweigeteilt. Die 360° rund um das Fahrzeug 100 entsprechend der Zeichenebene in der Draufsicht gemäß Figur 3b werden in zwei überwachte Winkelbereiche φ₁, φ₂ der Teilsichtfelder 34, 36 und dazwischenliegende, nicht überwachte Winkelbereiche aufgeteilt. Auf diese Weise können gezielt die Raumbereiche vor und hinter dem Fahrzeug 100 mit derselben 3D-Kamera 10 überwacht werden. In Figur 3a-b ist das Fahrzeug 100 zusätzlich noch mit zwei Laserscannern 102a-b ausgerüstet, deren Schutzfelder 104a-b zur Unfallvermeidung mit Personen dienen. Die Laserscanner 102a-b werden aus sicherheitstechnischen Gründen eingesetzt, solange die 3D-Überwachung noch nicht die gleiche Zuverlässigkeit zur rechtzeitigen Erkennung von Personen erreicht.

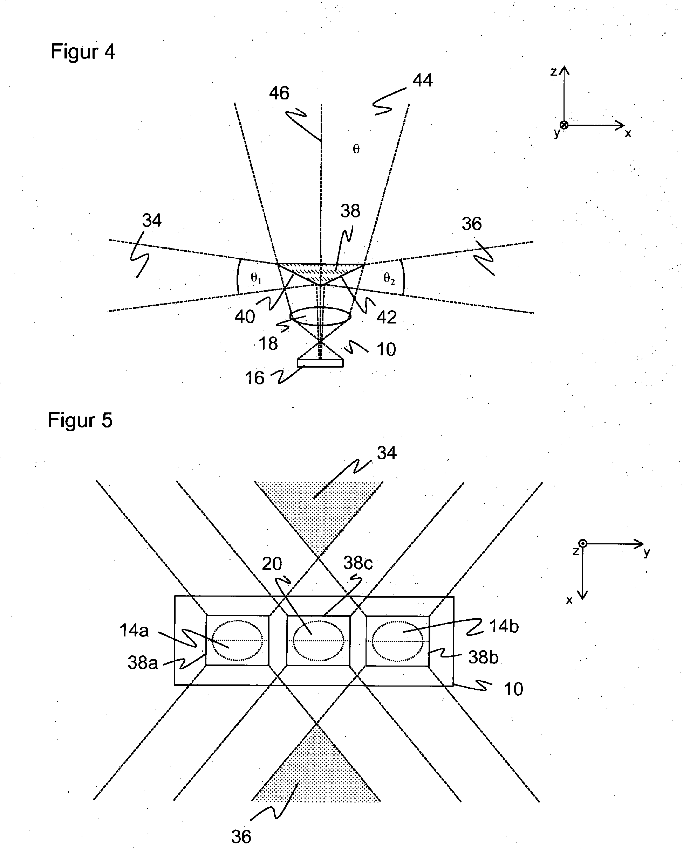

Figur 4 zeigt in einer Seitenansicht ein erstes Ausführungsbeispiel der Spiegeloptik 38. Sie weist die Form eines Dreiecksprismas auf, von dem in der Seitenansicht nur die als gleichschenkliges Dreieck ausgebildete Grundfläche zu erkennen ist. Da es sich um ein senkrechtes Dreiecksprisma handelt, findet sich die Grundfläche auf jeder Schnitthöhe in identischer Form und Lage wieder. Aus Anschauungsgründen wird die geometrische Form des Dreiecksprismas im Folgenden als Satteldach bezeichnet. Dabei ist zu beachten, dass die regelmäßige, symmetrische Form des Satteldachs zunächst nur für dieses Ausführungsbeispiel gegeben ist. In weiteren Ausführungsformen wird die Lage und Form durch Änderungen der Winkel und Seitenflächen und sogar durch gekrümmte Seitenflächen variiert. Optisch relevant sind jeweils die Dachflächen des Satteldachs, die eine vordere Spiegelfläche 40 und eine rückseitige Spiegelfläche 42 bilden. Es ist dann konstruktiv besonders einfach, die Spiegeloptik als massives Satteldach auszubilden. Von dieser Konstruktion kann allerdings nahezu beliebig abgewichen werden, solange die Dachflächen erhalten bleiben, und auch solche Varianten werden weiterhin als Form eines Satteldachs aufgefasst.

Die 3D-Kamera 10 selbst ist hierbei nur rudimentär durch ihren Bildsensor 16 und ihre Empfangsoptik 18 dargestellt. Ohne die Spiegeloptik 38 ergibt sich ein Sichtfeld 44 mit Öffnungswinkel θ, das sich symmetrisch um die optische Achse 46 des Bildsensors 16 erstreckt. In diesem Sichtfeld 44 ist die Spiegeloptik 38 mit dem First des Satteldachs nach unten derart angeordnet, dass die optische Achse 46 senkrecht durch den First und insbesondere die Firstmitte verläuft, wobei die optische Achse 46 zugleich die Symmetrieachse der dreieckigen Grundfläche des Satteldachs bildet. Auf diese Weise wird das Sichtfeld 44 in die beiden Teilsichtfelder 34, 36, aufgeteilt, die im Wesentlichen senkrecht zu der optischen Achse 46 orientiert sind. Die genaue Orientierung der Teilsichtfelder 34, 36 gegenüber der optischen Achse 46 hängt von der Geometrie der Spiegeloptik ab. Im Beispiel des Einsatzes an einem Fahrzeug blickt die 3D-Kamera 10 somit nach oben, und ihr Sichtfeld wird durch die Spiegeloptik 36 in ein nach vorne gerichtetes Teilsichtfeld 34 und ein nach hinten gerichtetes Teilsichtfeld 36 aufgeteilt.

Figur 5 zeigt eine Draufsicht auf eine als Stereokamera ausgebildete 3D-Kamera 10. Jedem der Kameramodule 14a-b sowie der Beleuchtungseinheit 20 ist jeweils eine Spiegeloptik 38a-c vorgeschaltet. Dabei handelt es sich vorzugsweise um untereinander gleichartige Spiegeloptiken 38a-c, vor allem bei den Spiegeloptiken 38a-b für die Kameramodule 14a-b, um dem Stereoalgorithmus keine unnötigen Verzerrungen zu liefern. Die einzelnen Sicht- und Beleuchtungsfelder der Kameramodule 14a-b und der Beleuchtungseinheit 20 werden durch die Spiegeloptiken 38a-c jeweils in vordere und hintere Teilfelder aufgeteilt. Als effektives vorderes Teilsichtfeld 34 und hinteres Teilsichtfeld 36 ergibt sich der Überlagerungsbereich, in dem beide Kameramodule 14a-b Bilddaten erfassen und die Szenerie ausgeleuchtet ist. Dieser Bereich erscheint in Figur 5 nur deshalb besonders klein, weil hier nur der Nahbereich dargestellt ist.

In einer alternativen, nicht dargestellten Ausführungsform sind die Spiegeloptiken 38a-c als ein gemeinsames Bauteil ausgeführt. Das ist insbesondere dann möglich, wenn in einer Richtung, in der die Spiegeloptiken 38a-c zueinander versetzt angeordnet sind, keine Krümmung vorgesehen ist, wie in zahlreichen der im Folgenden beschriebenen Ausführungsformen.

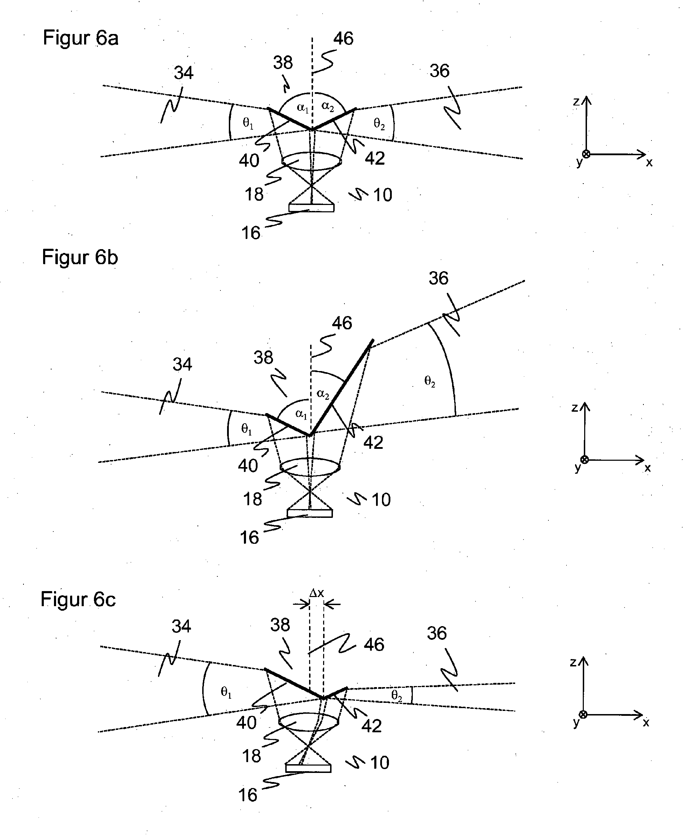

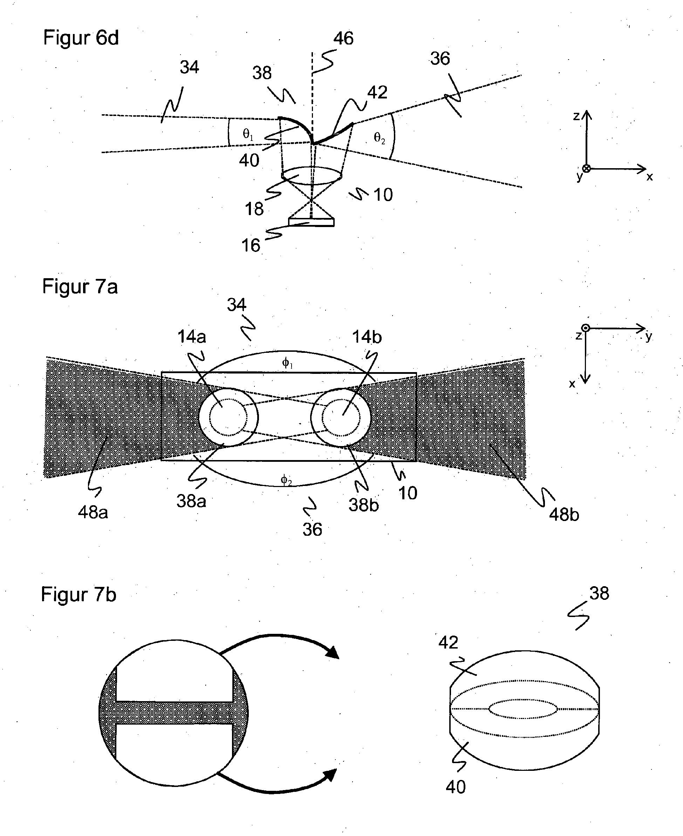

Figur 6 zeigt in Seitenansichten verschiedene Ausführungsformen der Spiegeloptik 38 und damit resultierende Teilsichtfelder 34, 36. Figur 6a entspricht dabei weitgehend der Figur 4 und dient als Ausgangspunkt für die Erläuterung einiger der zahlreichen denkbaren Variationsmöglichkeiten. Diese Variationen können auch untereinander kombiniert werden, um zu noch weiteren Ausführungsformen zu gelangen.

Gemeinsam ist den anhand der Figur 6 erläuterten Ausführungsformen, dass die vordere Spiegelfläche 40 und die rückseitige Spiegelfläche 42 in der mit y bezeichneten Richtung senkrecht zur Zeichenebene keine Formänderungen aufweisen. Wenn man die Richtung der optischen Achse 46 als Höhenrichtung auffasst, bleiben also die Spiegelflächen 40, 42 in allen Höhenschnitten flach. Diese Eigenschaft hat den Vorzug, dass keine Anpassungen eines Stereoalgorithmus' oder einer Triangulationsauswertung des projizierten Beleuchtungsmusters erforderlich sind. Das liegt daran, dass ohnehin die Disparitätsschätzung beziehungsweise die Korrelationsauswertung des Beleuchtungsmusters nur in der y-Richtung erfolgt, also auf derselben Höhe, in der keinerlei Verzerrungen eingeführt werden.

Bei der regelmäßigen, symmetrischen Spiegeloptik 38 gemäß Figur 6a bleiben zudem die Dachflächen des Satteldachs, als welche die vordere Spiegelfläche 40 und die rückseitige Spiegelfläche 42 hier häufig bezeichnet sind, eben und untereinander gleich groß. Auch die Kippwinkel α₁, α₂ gegenüber der optischen Achse 46 sind gleich. Dadurch wird das Licht in beziehungsweise aus der vorderen und der hinteren Richtung gleichförmig und gleichartig umgelenkt. Die Teilsichtfelder 34, 36 sind untereinander gleich groß und haben dieselbe vertikale Ausrichtung, die durch die Kippwinkel α₁=α₂ bestimmt ist.

Figur 6b zeigt eine Variante, in der die beiden Kippwinkel α₁, α₂ unterschiedlich sind. Dadurch wird zugleich eine der Spiegelflächen 42 größer als die andere Spiegelfläche 40, damit das ursprüngliche Sichtfeld 44 durch die Spiegeloptik 38 vollständig ausgenutzt wird. Das kann alternativ auch bei gleicher Größe der Spiegelflächen 40, 42 durch einen Versatz des Firsts gegenüber der optischen Achse 46 erreicht werden.

Die unterschiedlichen Kippwinkel α₁, α₂ führen zu einer unterschiedlichen vertikalen Ausrichtung der Teilsichtfelder 34, 36. Das kann beispielsweise vorteilhaft sein, um vor dem Fahrzeug 100 den bodennahen Bereich und hinter dem Fahrzeug 100 einen über dem Boden befindlichen Raumbereich zu überwachen, etwa oberhalb eines Anhängers.

Figur 6c zeigt eine Ausführungsform mit einer außermittigen Position der Spiegeloptik 38. Dabei erhält der First einen Versatz Δx gegenüber der optischen Achse 46. Zugleich wird das Sichtfeld 44 weiterhin vollständig abgedeckt, indem die eine Spiegelfläche 40 entsprechend dem Versatz vergrößert und die andere Spiegelfläche 42 verkleinert wird. Dadurch werden die Bildpunkte des Bildsensors 16 beziehungsweise dessen Fläche ungleichmäßig verteilt, und es entsteht ein größeres Teilsichtfeld 34 mit größerem Öffnungswinkel θ₁ und ein kleineres Teilsichtfeld 36 mit kleinerem Öffnungswinkel θ₂. Bei einem Fahrzeug 100 ist dies beispielsweise nützlich, wenn nach vorne hin ein größeres Sichtfeld beziehungsweise mehr Messpunkte benötigt werden als nach hinten.

Figur 6d zeigt eine Ausführungsform, bei der die Spiegelflächen 40, 42 nicht mehr eben sind, sondern eine Krümmung oder Kontur aufweisen. Diese Krümmung bleibt aber auf die durch die optische Achse 46 gegebene Höhenrichtung beschränkt. Weiterhin sind die Spiegelflächen in lateraler Richtung, also auf der gleichen Höhe entsprechend der mit y-Richtung bezeichneten Senkrechten zur Zeichnungsebene flach. Durch eine konkave Krümmung wie diejenige der vorderen Spiegelfläche 40 wird die Messpunktdichte und damit die vertikale Auflösung in dem zugehörigen Teilsichtfeld 34 auf Kosten eines verkleinerten vertikalen Öffnungswinkels θ₁ erhöht. Umgekehrt kann die Messpunktdichte durch eine konvexe Krümmung wie diejenige der hinteren Spiegelfläche 42 verringert werden, um auf Kosten einer verschlechterten Auflösung einen größeren vertikalen Öffnungswinkel θ₂ zu gewinnen.

Als weitere Variation kann die Krümmung oder Kontur statt wie in der Figur 6d einheitlich auch lediglich abschnittsweise vorgesehen sein. Beispielsweise wird dazu eine Spiegelfläche 40, 42 mit einer s-förmigen Kontur versehen, die im oberen Teil konvex und im unteren Teil konkav ausgebildet ist. Dadurch wird innerhalb eines Teilsichtfeldes 34, 36 die Messpunktdichte variiert. In ähnlicher Weise können beliebige, insbesondere parabolische, hyperbolische, sphärische, konische oder auch elliptische Abschnitte zusammengesetzt werden, um eine gewünschte, an die Anwendung angepasste Verteilung der verfügbaren Messpunkte auf die Höhenlagen zu erreichen.

Die zu Figur 6 beschriebenen Ausführungsformen können untereinander kombiniert werden. Dabei entstehen zahlreiche Varianten von Spiegelflächen 40, 42 mit unterschiedlichen Kippwinkeln, Größen, unterschiedlichem Versatz gegenüber der optischen Achse und Konturen in Höhenrichtung, bei denen die entsprechenden, einzeln beschriebenen Effekte sich ergänzen.

Während in den zu Figur 6 beschriebenen Ausführungsformen die Spiegelflächen 40, 42 in der mit y bezeichneten Richtung, also auf gleichen Höhenlagen bezüglich der optischen Achse 46, eben sind und somit keine Kontur aufweisen, wird nun anhand der Figur 7 eine weitere Ausführungsform beschrieben, die auch eine umlaufende Kontur auf gleicher Höhe aufweist. Damit wird allerdings bei 3D-Kameras 10, die auf Mono- oder Stereotriangulation basieren, also der Auswertung eines projizierten Beleuchtungsmusters oder einem Stereoskopiealgorithmus, eine Entzerrung der Bilder oder eine Anpassung der Auswertung erforderlich.

Wie bei herkömmlichen omnidirektionalen Spiegeloptiken sollte die umlaufende Kontur die einleitend genannte Single-Viewpoint-Bedingung erfüllen, also beispielsweise elliptisch, hyperbolisch oder konisch sein, um eine verlustfreie Entzerrung zu ermöglichen. Im Gegensatz zu den herkömmlichen Spiegeloptiken wird aber kein 360°-Panoramablick erzeugt, sondern es werden weiterhin zwei separate, durch nicht überwachte Winkelbereiche voneinander getrennte Teilsichtfelder 34, 36 erzeugt.

Betrachtet man nochmals in einer Draufsicht gemäß Figur 7a eine stereoskopische 3D-Kamera 10, so erkennt man, dass die beiden Kameramodule 14a-b sich gegenseitig teilweise abschatten, wie durch dunkle Bereiche 48a-b illustriert. Würden nun die Spiegeloptiken 38a-b eine omnidirektionale Perspektive erlauben, so würde ein Teil der verfügbaren Bildpunkte der Bildsensoren 16 verschenkt, weil sie nur die abgeschatteten dunkeln Bereiche 48a-b aufnehmen, die für eine 3D-Auswertung nicht genutzt werden können.

Deshalb wird in der erfindungsgemäßen Ausführungsform wie in Figur 7b illustriert eine Spiegeloptik 38 gewählt, bei welcher die beiden Spiegelflächen 40, 42 aufgrund ihrer umlaufenden Kontur gerade einen Winkelbereich nicht erfassen, welcher den dunklen Bereichen 48a-b entspricht. Damit werden alle verfügbaren Bildpunkte auf die Teilsichtfelder 34, 36 konzentriert. Eine solche Spiegeloptik 38 kommt auch mit einer deutlich geringeren Krümmung aus und führt deshalb weniger Verzerrungen ein.

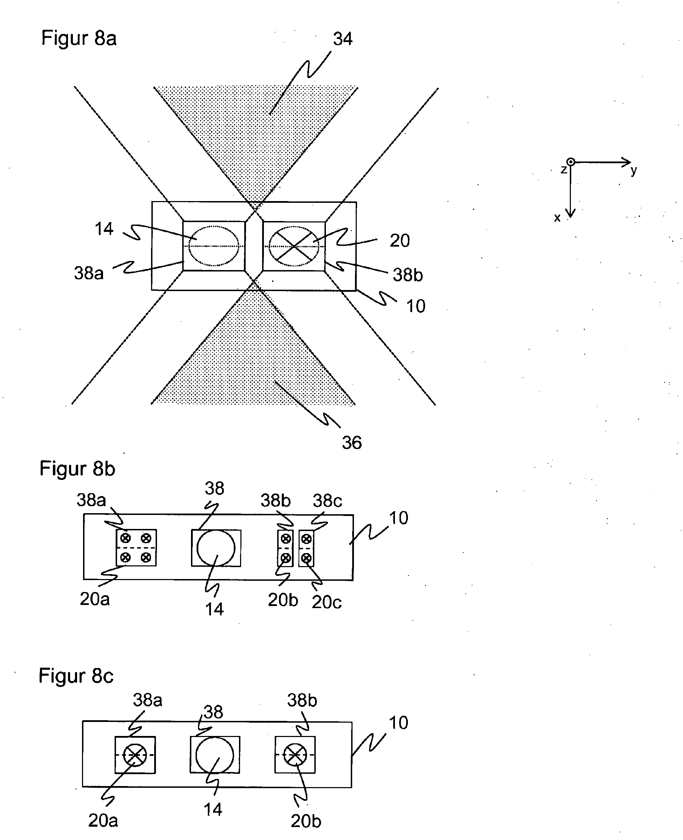

Figur 8a zeigt in einer Draufsicht eine weitere Ausführungsform der 3D-Kamera 10 als Lichtlaufzeitkamera entsprechend dem Grundaufbau der Figur 2. Dem Kameramodul 14 und der Beleuchtung 20 ist jeweils eine Spiegeloptik 38a-b zugeordnet, um das Sichtfeld beziehungsweise das Beleuchtungsfeld aufzuteilen. Dadurch ergeben sich in den Überlappungsbereichen die überwachten Teilsichtfelder 34, 36. Eine Lichtlaufzeitkamera ist weniger empfindlich gegenüber Verzerrungen, so dass auch Konturen in y-Richtung ohne aufwändige Bildentzerrung oder Anpassung der Auswertung möglich sind.

Wie in den Figuren 8b und 8c illustriert, welche Draufsichten von Varianten der Lichtlaufzeitkamera gemäß Figur 8a zeigen, kann die Beleuchtungseinheit 20 mehrere Lichtquellen oder Beleuchtungseinheiten 20a-c aufweisen. Dann werden diesen Beleuchtungseinheiten 20a-c in verschiedenen Ausführungsformen Spiegeloptiken 38a-c gemeinsam, gruppenweise oder sogar individuell zugeordnet.

## Patentansprüche

1. 3D-Kamera (10) zur Aufnahme von Tiefeninformationen und Erfassung von dreidimensionalen Bilddaten aus einem Überwachungsbereich (12, 34, 36), die als Stereokamera ausgebildet ist und dazu mindestens zwei Kameramodule (14a-b) mit jeweils einem Bildsensor (16a-b) in zueinander versetzter Perspektive sowie eine Stereoskopieeinheit (28) aufweist, in der mittels eines Stereoalgorithmus' einander zugehörige Teilbereiche in von den beiden Kameramodulen (14a-b) aufgenommenen Bildern erkannt werden und deren Entfernung anhand der Disparität berechnet wird, wobei die 3D-Kamera (10) zusätzlich eine Beleuchtungseinheit (20) zur Erzeugung eines strukturierten Beleuchtungsmusters in dem Überwachungsbereich (12) aufweist,
**dadurch gekennzeichnet,**
**dass** jedem der Kameramodule (14a-b) sowie der Beleuchtungseinheit (20) jeweils eine Spiegeloptik (38a-c) zur Erweiterung des Sichtfeldes (44) und des Beleuchtungsfeldes vorgeschaltet ist
und **dass** die Spiegeloptik (38a-c) jeweils eine vordere Spiegelfläche (40) und eine rückseitige Spiegelfläche (42) aufweist und derart in dem Sichtfeld (44) des Bildsensors (16a-b) beziehungsweise dem Beleuchtungsfeld der Beleuchtungseinheit (20) angeordnet ist, dass die vordere Spiegelfläche (40) ein erstes Teilsichtfeld über einen ersten Winkelbereich und die rückseitige Spiegelfläche (42) ein zweites Teilsichtfeld über einen zweiten Winkelbereich erzeugt, wobei der erste Winkelbereich und der zweite Winkelbereich nicht überlappen und durch nicht überwachte Winkelbereiche voneinander getrennt sind, in denen keine 3D-Bilddaten erfasst werden.

2. 3D-Kamera (10) nach Anspruch 1,
wobei die Spiegeloptiken (38a-b) eine um die optische Achse (46) des zugehörigen Bildsensors (16a-b) umlaufende konvexe Kontur aufweisen, die gerade so stark gekrümmt ist, dass die nicht überwachten Winkelbereiche eines jeweiligen Kameramoduls (14a-b) einer Abschattungszone (48a-b) durch die anderen Kameramodule (14b-a) entsprechen.

3. 3D-Kamera (10) zur Aufnahme von Tiefeninformationen und zur Erfassung von dreidimensionalen Bilddaten aus einem Überwachungsbereich (12, 34, 36), die als Lichtlaufzeitkamera ausgebildet ist und dazu ein Kameramodul (14) mit einem Bildsensor (16), eine Beleuchtungseinheit (20) und eine Lichtlaufzeiteinheit (32) aufweist, um die Lichtlaufzeit eines Lichtsignals zu bestimmen, das von der Beleuchtungseinheit (20) ausgesandt, an Objekten in dem Überwachungsbereich (12) remittiert und in dem Bildsensor (16) erfasst wird,
**dadurch gekennzeichnet,**
**dass** dem Kameramodul (14) und der Beleuchtungseinheit (20) jeweils eine Spiegeloptik (38a-b) zur Erweiterung des Sichtfeldes und des Beleuchtungsfeldes zugeordnet ist, dass die Spiegeloptik (38a-b) jeweils eine vordere Spiegelfläche (40) und eine rückseitige Spiegelfläche (42) aufweist und derart in dem Sichtfeld des Bildsensors (16) beziehungsweise dem Beleuchtungsfeld der Beleuchtungseinheit (20) angeordnet ist, dass die vordere Spiegelfläche (40) ein erstes Teilsichtfeld beziehungsweise Teilbeleuchtungsfeld über einen ersten Winkelbereich und die rückseitige Spiegelfläche (42) ein zweites Teilsichtfeld beziehungsweise Teilbeleuchtungsfeld über einen zweiten Winkelbereich erzeugt, wobei der erste Winkelbereich und der zweite Winkelbereich nicht überlappen und durch nicht überwachte Winkelbereiche voneinander getrennt sind, in denen keine 3D-Bilddaten erfasst werden.

4. 3D-Kamera (10) nach einem der vorhergehenden Ansprüche,
wobei die Spiegeloptik (38) wie ein Satteldach geformt ist, dessen First senkrecht zu der optischen Achse (46) des Bildsensors (16, 16a-b) ausgerichtet und dem Bildsensor (16, 16a-b) zugewandt ist, so dass die Dachflächen die vordere Spiegelfläche (40) und die rückseitige Spiegelfläche (42) bilden.

5. 3D-Kamera (10) nach Anspruch 4,
wobei das Satteldach regelmäßig und symmetrisch ausgebildet ist.

6. 3D-Kamera (10) nach Anspruch 4 oder 5,
wobei der First zu der optischen Achse (46) des Bildsensors (16, 16a) versetzt angeordnet ist.

7. 3D-Kamera (10) nach einem der vorhergehenden Ansprüche,
wobei die vordere Spiegelfläche (40) und die rückseitige Spiegelfläche (42) unterschiedliche Größen aufweisen.

8. 3D-Kamera (10) nach einem der vorhergehenden Ansprüche,
wobei die vordere Spiegelfläche (40) eine andere Neigung gegenüber der optischen Achse (46) des Bildsensors (16, 16a-b) aufweist als die rückseitige Spiegelfläche (42).

9. 3D-Kamera (10) nach einem der vorhergehenden Ansprüche,
wobei zumindest eine der Spiegelflächen (40, 42) zumindest abschrittsweise eine konvexe oder konkave Kontur aufweist.

10. 3D-Kamera (10) nach Anspruch 9,
wobei die Kontur in Richtung der optischen Achse (46) des Bildsensors (16, 16a-b) ausgebildet ist.

11. 3D-Kamera (10) nach Anspruch 9 oder 10,
wobei die Kontur um die optische Achse (46) des Bildsensors (16, 16a-b) umlaufend ausgebildet ist, um den ersten Winkelbereich und/oder den zweiten Winkelbereich zu verändern.

12. 3D-Kamera (10) nach einem der vorhergehenden Ansprüche,
wobei die Spiegeloptiken (38a-c) als gemeinsames Bauteil ausgebildet sind.

## Claims

1. A 3D camera (10) for acquiring depth information and detecting three-dimensional image data from a monitored zone (12, 34, 36), which is configured as a stereo camera and for this purpose has at least two camera modules (14a-b), each having an image sensor (16a-b) in mutually offset perspectives, and has a stereoscopic unit (28) in which mutually associated partial regions are recognized by means of a stereo algorithm in images taken by the two camera modules (14a-b) and their distance is calculated based on the disparity, wherein the 3Dcamera (10) additionally comprises a lighting unit (20) for generating a structured lighting pattern in the monitored zone (12),
**characterized in that** a respective mirror optics (38a-c) for expanding the field of view (44) and the lighting field is disposed in front of each camera module (14a-b) and the lighting unit (20),
and **in that** the mirror optics (38a-c) each has a front mirror surface (40) and a rear mirror surface (42) and is arranged in the field of view (44) of the image sensor (16a-b) and the lighting field of the lighting unit (20), respectively, such that the front mirror surface (40) generates a first partial field of view (34) over a first angular region and the rear mirror surface (42) generates a second partial field of view (36) over a second angular region, with the first angular region and the second angular region not overlapping and being separated from one another by non-monitored angular regions in which no 3D image data are acquired.

2. The 3D camera (10) in accordance with claim 1,
wherein the mirror optics (38a-b) have a convex contour which runs about the optical axis (46) of the associated image sensor (16a-b) and which is curved just so strongly that the non-monitored angular regions of a respective camera module (14a-b) correspond to a shaded zone (48a-b) by the other camera modules (14b-a).

3. A 3D camera (10) for acquiring depth information and detecting three-dimensional image date from a monitored zone (12, 34, 36), which is configured as a time-of-flight camera and for this purpose has a camera module (14) with an image sensor (16), a lighting unit (20) and a time-of-light unit (32) to determine the time-of-flight of a light signal which is transmitted from the lighting unit (20), remitted at objects in the monitored zone (12) and detected in the image sensor (16),
**characterized in that** a respective mirror optics (38a-b) for expanding the field of view (44) and the lighting field is disposed in front of the camera module (14) and the lighting unit (20), **in that** the mirror optics (38a-b) each has a front mirror surface (40) and a rear mirror surface (42) and is arranged in the field of view (44) of the image sensor (16a-b) and the lighting field of the lighting unit (20), respectively, such that the front mirror surface (40) generates a first partial field of view (34) or partial lighting field, respectively, over a first angular region and the rear mirror surface (42) generates a second partial field of view (36) or partial lighting field, respectively, over a second angular region, with the first angular region and the second angular region not overlapping and being separated from one another by non-monitored angular regions in which no 3D image data are acquired.

4. The 3D camera (10) in accordance with any of the preceding claims,
wherein the mirror optics (38) is shaped like a ridge roof whose ridge is aligned perpendicular to the optical axis (46) of the image sensor (16, 16a-b) and faces the image sensor (16, 16a-b) such that the roof surfaces form the front mirror surface (40) and the rear mirror surface (42).

5. The 3D camera (10) in accordance with claim 4,
wherein the ridge roof is regular and symmetrical.

6. The 3D camera (10) in accordance with claim 4 or 5,
wherein the ridge is arranged offset from the optical axis (46) of the image sensor (16, 16a).

7. The 3D camera (10) in accordance with any of the preceding claims,
wherein the front mirror surface (40) and the rear mirror surface (42) have different sizes.

8. The 3D camera (10) in accordance with any of the preceding claims,
wherein the front mirror surface (40) has a different inclination with respect to the optical axis (46) of the image sensor (16, 16a-b) than the rear mirror surface (42).

9. The 3D camera (10) in accordance with any of the preceding claims,
wherein at least one of the mirror surfaces (40, 42) at least sectionally has a convex or concave contour.

10. The 3D camera (10) in accordance with claim 9,
wherein the contour is formed in a direction of the optical axis (46) of the image sensor (16, 16a-b).

11. The 3D camera (10) in accordance with claim 9 or 10,
wherein the contour is peripheral about the optical axis (46) of the image sensor (16, 16a-b) to vary the first angular region and/or the second angular region.

12. The 3D camera (10) in accordance with any of the preceding claims,
wherein the mirror optics (38a-c) are configured as a common component.

## Revendications

1. Caméra 3D (10) pour l'enregistrement d'informations en profondeur et la saisie de données image tridimensionnelles provenant d'une zone de surveillance (12, 34, 36), qui est réalisée comme une caméra stéréoscopique et comprend à cet effet au moins deux modules de caméra (14a-b) ayant chacun un capteur d'images (16a-b) en perspective décalés l'un par rapport à l'autre, ainsi qu'une unité de stéréoscopie (28) dans laquelle des zones partielles associées l'une à l'autre sont reconnues au moyen d'un algorithme de stéréoscopie dans les images enregistrées par les deux modules de caméra (14a-b) et leur éloignement est calculé au moyen de la disparité, dans laquelle la caméra 3D (10) comprend additionnellement une unité d'éclairage (20) pour engendrer un motif d'éclairage structuré dans la zone de surveillance (12),
**caractérisé en ce que**
une optique à miroir (38a-c) respective est disposée en avant de chacun des modules de caméra (14a-b) ainsi que de l'unité d'éclairage (20), pour élargir le champ de vision (44) et le champ d'éclairage,
et **en ce que** l'optique à miroir (38a-c) comprend respectivement une surface miroir antérieure (40) et une surface miroir postérieure (42), et est agencée dans le champ de vision (44) du capteur d'images (16a-b) ou respectivement dans le champ d'éclairage de l'unité d'éclairage (20) de telle façon que la surface miroir antérieure (40) engendre un premier champ de vision partiel sur une première plage angulaire, et la surface miroir postérieure (42) engendre un second champ de vision partiel sur une seconde plage angulaire, dans laquelle la première plage angulaire et la seconde plage angulaire ne se chevauchent pas et sont séparées l'une de l'autre par des plages angulaires non surveillées dans lesquelles aucunes données d'images 3D ne sont saisies.

2. Caméra 3D (10) selon la revendication 1,
dans laquelle les optiques à miroir (38a-b) présentent un contour convexe périphérique autour de l'axe optique (46) du capteur d'images associé (16a-b), qui est incurvé juste aussi fort que les plages angulaires non surveillées d'un module de caméra respectif (14a-b) correspondent à une zone de masquage (48a-b) par les autres modules de caméra (14b-a).

3. Caméra 3D (10) pour l'enregistrement d'informations en profondeur et la saisie de données image tridimensionnelles provenant d'une zone de surveillance (12, 34, 36), qui est réalisée comme une caméra à temps de parcours de la lumière et comprend à cet effet un module de caméra (14) avec un capteur d'images (16), une unité d'éclairage (20) et une unité à temps de parcours de la lumière (32) afin de déterminer le temps de parcours d'un signal lumineux qui est émis par l'unité d'éclairage (20), qui est renvoyé sur des objets dans la zone de surveillance (12) et qui est saisi dans le capteur d'image (16),
**caractérisée en ce que**
une optique à miroir (38a-b) respective est associée au module de caméra (14) et à l'unité d'éclairage (20) pour élargir le champ de vision et le champ d'éclairage, **en ce que** l'optique à miroir (38a-b) comprend respectivement une surface miroir antérieure (40) et une surface miroir postérieure (42) et est agencée dans le champ de vision du capteur d'image (16) ou respectivement dans le champ d'éclairage de l'unité d'éclairage (20) de telle façon que la surface miroir antérieure (40) engendre un premier champ de vision partiel ou respectivement un premier champ d'éclairage partiel sur une première plage angulaire et la surface miroir postérieure (42) engendre un second champ de vision partiel ou respectivement un second champ d'éclairage partiel sur une seconde plage angulaire, la première plage angulaire et la seconde plage angulaire ne se chevauchent pas et sont séparées l'une de l'autre par des plages angulaires non surveillées dans lesquelles aucunes données d'images 3D ne sont saisies.

4. Caméra 3D (10) selon l'une des revendications précédentes,
dans laquelle l'optique à miroir (3 8) est formée à la manière d'un toit à deux pentes, dont le faîte est orienté perpendiculairement à l'axe optique (46) du capteur d'image (16, 16a-b) et est tourné vers le capteur d'images (16, 16a-b), de sorte que les surfaces du toit forment la surface miroir antérieure (40) et la surface miroir postérieure (42).

5. Caméra 3D (10) selon la revendication 4,
dans laquelle le toit à deux pentes est réalisé de façon régulière et symétrique.

6. Caméra 3D (10) selon la revendication 4 ou 5,
dans laquelle le faîte est agencé en décalage par rapport à l'axe optique (46) du capteur d'images (16, 16a).

7. Caméra 3D (10) selon l'une des revendications précédentes,
dans laquelle la surface miroir antérieure (40) et la surface miroir postérieure (42) ont des tailles différentes.

8. Caméra 3D (10) selon l'une des revendications précédentes,
dans laquelle la surface miroir antérieure (40) présente par rapport à l'axe optique (46) du capteur d'images (16, 16a-b) une inclinaison différente de la surface miroir postérieure (42).

9. Caméra 3D (10) selon l'une des revendications précédentes,
dans laquelle l'une au moins des surfaces miroir (40, 42) présente un contour convexe ou concave, au moins par tronçons.

10. Caméra 3D (10) selon la revendication 9,
dans laquelle le contour est réalisé en direction de l'axe optique (46) du capteur d'images (16, 16a-b).

11. Caméra 3D (10) selon la revendication 9 ou 10,
dans laquelle le contour est réalisé en périphérie autour de l'axe optique (46) du capteur d'images (16, 16a-b), afin de modifier la première plage angulaire et/ou la seconde plage angulaire.

12. Caméra 3D (10) selon l'une des revendications précédentes,
dans laquelle les optiques à miroir (38a-c) sont réalisées sous forme de composant structurel commun.
